# EUROPEAN PATENT SPECIFICATION

(11) **EP 2 882 981 B1**
(45) Date of publication and mention of the grant of the patent: **30.11.2016**
(21) Application number: 13752914.5
(22) Date of filing: 07.08.2013
(51) Int. Cl.: F16H 29/20, B62M 11/00

(54) **A CONTINUOUSLY VARIABLE GEAR RATIO CHANGING SYSTEM**
SYSTEM ZUM STUFENLOSEN WECHSELN VON ÜBERSETZUNGSVERHÄLTNIS
SYSTÈME DE CHANGEMENT DE RAPPORT D'ENGRENAGE CONTINU

(30) Priority: 07.08.2012 GB 201214043
(43) Date of publication of application: 17.06.2015
(73) Proprietor: Allen, Michael, Charles, Pollokshields, Glasgow G41 2NQ (GB)
(72) Inventor: Allen, Michael, Charles, Pollokshields, Glasgow G41 2NQ (GB)
(74) Representative: Gordon, Naoise Padhraic Edward
(86) International application number: PCT/GB2013/000331
(87) International publication number: WO 2014/023926

(56) References cited:
- DE-C1- 10 127 094
- US-A- 1 869 189

## Description

### Introduction

The present invention relates to a continuously variable gear ratio changing system suitable for use as a bicycle gear but generally useable in other applications.

### Background

The gear ratio of a gear may be defined as the ratio of the angular velocity of the input gear to the angular velocity of the output gear. In the field of bicycles, many bicycles have variable ratio transmissions provided by derailleur gears (sprockets) or by hub gears.

A Derailleur gear changing system usually comprises a chain, multiple sprockets of different sizes, and a mechanism to move the chain from one sprocket to another. Modern front and rear derailleurs typically consist of a moveable chain-guide that is operated remotely by a Bowden cable attached to a shifter mounted on the down tube, handlebar stem, or handlebar. When a rider operates the lever while pedalling, the change in cable tension moves the chain-guide from side to side onto different sprockets.

A gear changing systems may also be implemented with planetary or epicyclic gears, the gears and lubricants being sealed within the shell of the hub gear. This is in contrast with derailleur gears where the gears and mechanism are exposed to the elements.

In the case of gear ratio changing systems which use a derailleur mechanism or a planetary/ or elliptic hub gear, the gear ratio is changeable stepwise from a one discrete gear to another.

A gear ratio changing system where the gear ratio is continuously variable between a maximum and a minimum ratio is termed a continuously variable transmission (CVT). The term Continuously Variable Transmission need not include the whole drive train, including gearbox, clutch, prop shaft (for rear-wheel drive), differential and final drive shafts.

US 1869189 A discloses a transmission in accordance with the preamble of claim 1.

The present invention provides a novel CVT gear.

### Summary of the Invention

The invention is defined in claim 1. Preferred embodiments thereof are defined in the dependent claims.

### Brief Description of the Drawings

The present invention will now be described b way of example only, with reference to the accompanying drawings in which:
Figure 1 is a perspective view of a control shaft in accordance with a first embodiment of the present invention;
Figure 2 is a perspective view of an embodiment of a main axle mounted on the control shaft of figure 1;
Figure 3a is a perspective view of an embodiment of a swashplate assembly mounted on an the main axle of figure 2 with a swashplate bearing at an acute angle and figure 3b shows the swashplate bearing at an angle normal to the axis of rotation;
Figure 4 is a perspective view of the first embodiment of a gear in accordance with the present invention with the swashplate at an angle normal to the axis of rotation;
Figure 5a is a perspective view of the first embodiment of a gear in accordance with the present invention with the swashplate at an acute angle with respect to the axis of rotation and Figure 5b is a perspective view of the first embodiment of a gear in accordance with the present invention with the swashplate at an acute angle with respect to the axis of rotation and further illustrating the mechanism for altering gear ratios;
Figure 6 is a series of graphs showing the output at various swashplate angles;
Figure 7 is a perspective view with a cut away portion of an input transfer casing in accordance with the present invention;
Figure 8 is a perspective view with a cut away portion of an output transfer casing in accordance with the present invention; and
Figure 9 is a perspective view of a hub accommodating a gear in accordance with the present invention, drive chain and sprockets.
Figure 10 is a perspective view from a first side of a second embodiment of the present invention;
Figure 11 is a perspective view from a second side of a second embodiment of the present invention;
Figure 12 is a graph which illustrates one way of improving the smoothness of the output;
Figure 13 is a perspective view of a third embodiment of the present invention;
Figure 15 14 is a perspective view of a third embodiment of the present invention;

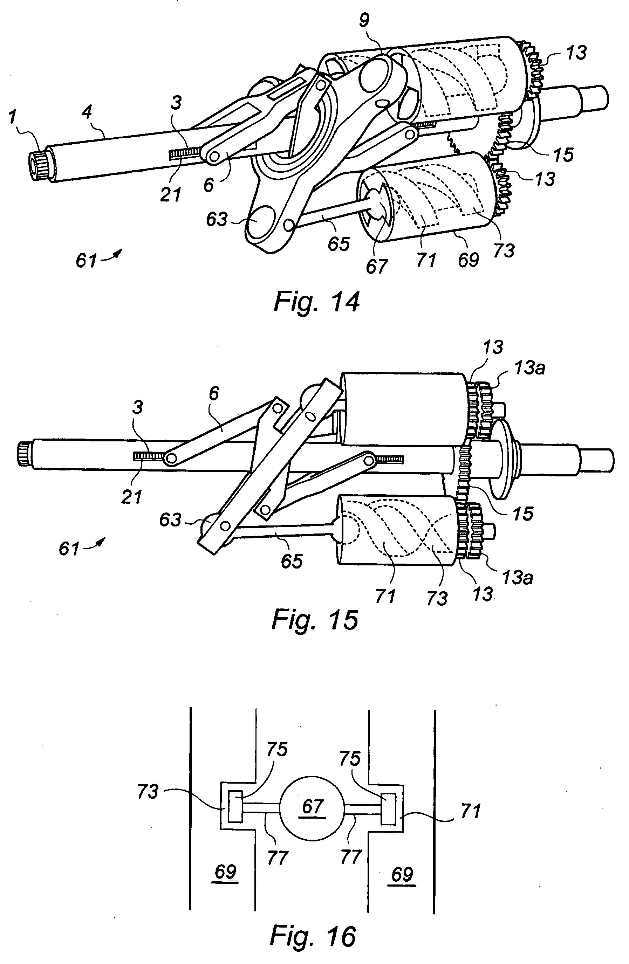

Figure 15 is a side view of the third embodiment of the present invention; and
Figure 16 is a side view which illustrates the way in which rotational motion is obtained from the reciprocating movement of the shaft by means of a bearing in a channel of the cylinder shown in figures 14 and 15.

### Detailed Description of the Drawings

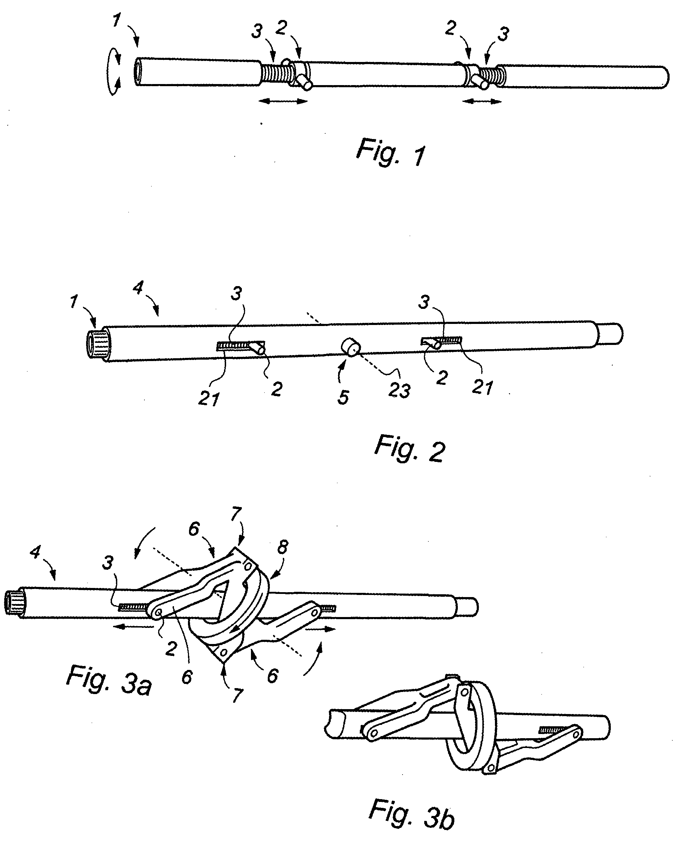

Figures 1 to 6 below show various components of a first embodiment of the present invention as they are assembled together.

Figure 1 is a perspective view of a control shaft in accordance with a first embodiment of the present invention and shows a control shaft 1 with a pair of control trunions 2 mounted on a splined or threaded section 3 of the control shaft. When the control shaft 1 is rotated relative to the trunions 2 (which are coupled to a swashplate bearing in use) the position of the control trunions 2 along the control shaft 1 is altered. The splined sections 3 are machined with opposite pitches such that rotation of the control shaft in a first direction moves the trunions 2 closer together along the shaft and rotation of the control shaft in a second direction moves the trunions 2 further apart along the shaft 1. In the assembled system, the control shaft 1 is rotated by way of input from a gear shifter which causes the trunions 2 to be moved by the splined portions on the shaft 3.

Figure 2 is a perspective view of an embodiment of a main axle mounted on the control shaft of figure 1 and shows the control shaft 1 of figure 1 mounted inside an axle 4. The control trunions 2 each extend outwards through slots 21 on both sides of the axle 4. Along with the splined section 3 of the control shaft 1, the slots are sized to limit the distance along the length of the axle 4 which the trunions 2 may travel it also prevents the trunions 2 from rotating relative to the axle. The axle 4 is tubular, and is mounted to the bicycle frame such that it cannot rotate. The perpendicular stub axle 05 projects from both sides of the axle and carries the swash plate assembly.

Figure 3a is a perspective view of a swashplate bearing assembly 25 mounted on the main axle 4 of figure 2 with a swashplate bearing 8 at an acute angle. The swashplate assembly comprises a pair of control linkages 6 which are rotatably connected to respective trunions 2. The control linkages 6 are rotatably connected to the control yoke 7 which is mounted onto the stub axle 5. The swashplate bearing 8 is mounted on the control yoke.

The above described arrangement links the yoke 7 to the trunions 2 on the control shaft 1 via the control linkages 6. Operation of a gear shifter moves the trunions along the control shaft 1 which alters the angle of the control linkages 6 and control yoke 8 so as to change the angle of the swashplate bearing 8 relative to the axis of rotation 23. An acute angle is shown in figure 3a and figure 3b shows the swashplate bearing at an angle normal to the axis of rotation.

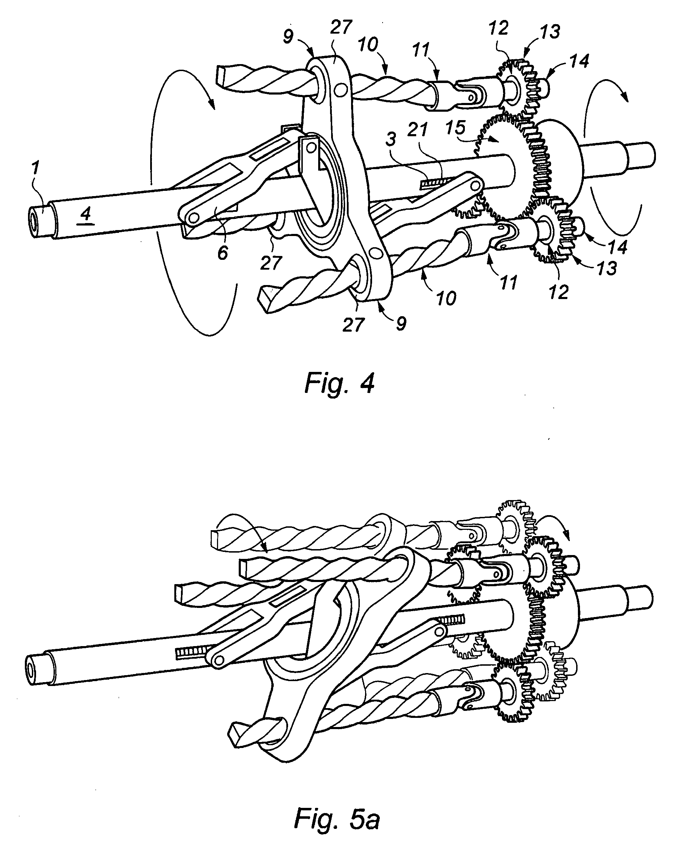

Figure 4 is a perspective view of the first embodiment of a gear with the swashplate at an angle normal to the axis of rotation. The figure shows the control shaft 1, axle 4 and swashplate bearing assembly of figures 1 to 3. In addition a swashplate 9 is rotatably mounted upon the swashplate bearing 8. The swashplate 9 has a generally triangular form. Each corner of the three corners 27 of the swashplate have slider nuts 29 which are operatively connected to helically profiled shafts 10 which are connected to a transfer pinion 13 mounted upon a transfer pinion axle 14 via one way bearing 12 and flexible joint 11. The transfer pinion is further connected to output gear 15.

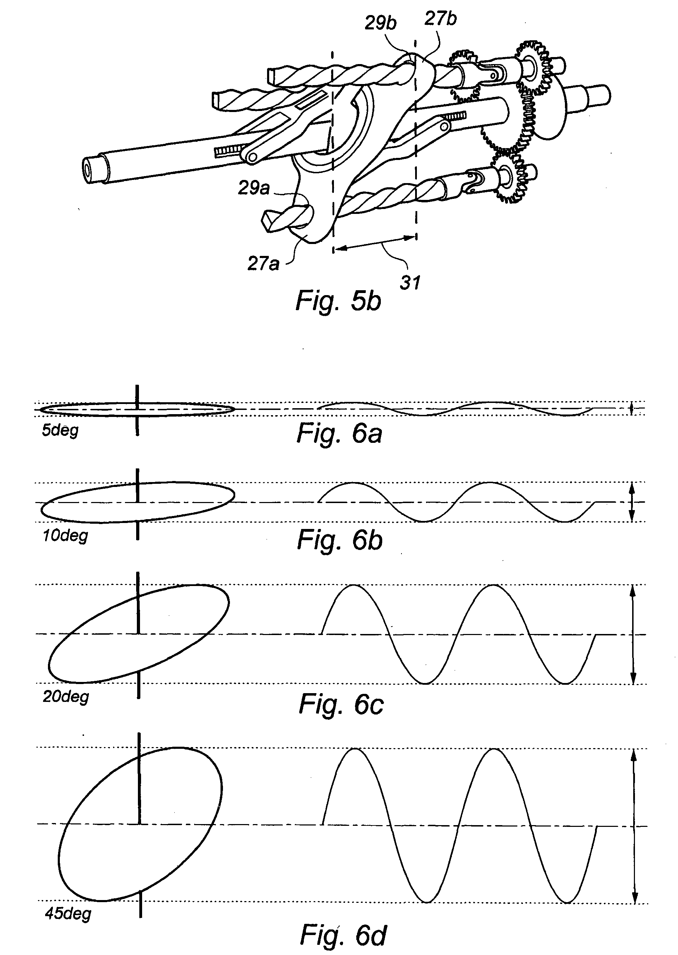

This feature of the present invention is further illustrated in figures 5 and 6. As the gear ratio is altered by input from the cyclist the swashplate 9 is rotated from its 1:1 ratio at the perpendicular position. As the swashplate 9 rotates around the axle 4 at an angle off of perpendicular, the swashplate 9, as well as rotating about the axle 4, moves in a reciprocating motion back and forth which is in parallel with the main axle 4. This reciprocating motion is converted into rotational motion at the transfer pinion 13 because the transfer pinion 13 is coupled to the swashplate 9 via the helical shaft which is coupled to the swashplate via the slider nut which is fixed to the swashplate 9. As the swashplate 9 rotates around the main shaft at an angle off of perpendicular, the swashplate 9 appears to 'wobble' as it rotates. This wobble pushes a slider nut 29 up and down the helical shaft 10, as the nut is held by the swashplate and is not free to rotate, the helical shaft is therefor made to rotate due to the helical form of the shaft. This rotation is transferred to the output gear 13 via a one-way bearing 12.

The more acute the angle subtended by the swashplate, the greater is the amplitude reciprocating motion. When the swashplate 9 is at an acute angle with respect to the axis of rotation it rotates around the central shaft 4 with the swashplate 9 at an angle less than perpendicular (normal) to the main shaft thereby reducing the gear ratio.

The angled swashplate 9 shown in figure 5 distinguishes between the corners 27a and 27b with respective nuts 29a and 29b. The linear distance 31 illustrates the maximum linear distance between any two corners of the swashplate 9. This distance is the maximum amplitude of the waveforms shown in figure 6 for a given swashplate angle. The diagrams (Fig-06a to Fig-06d) below illustrate the affect of the change in angle between the main shaft(04) and the swashplate 9.

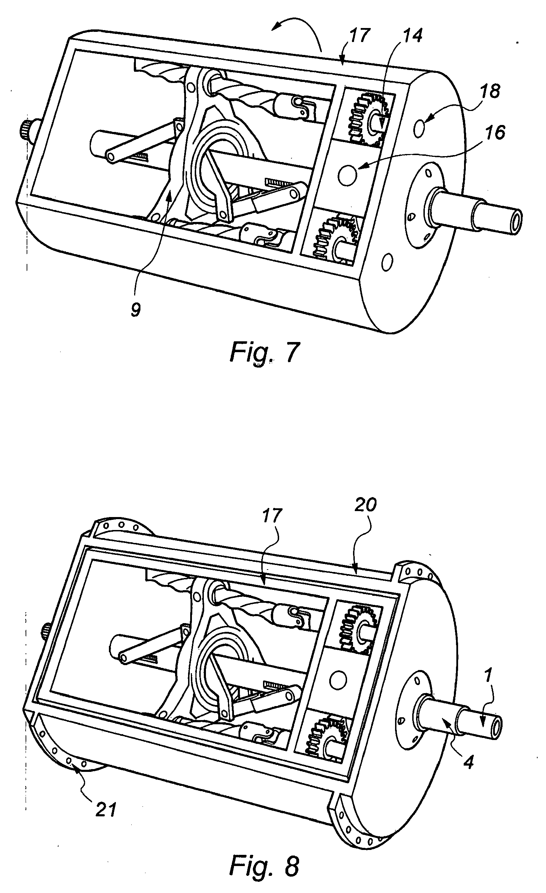

Figure 7 is a perspective view with a cut away portion of an input transfer casing 17 in accordance with the present invention. The input transfer casing 17 encloses the gear mechanism as illustrated by the above example. In use, it takes input power from an input sprocket (not shown) and as it rotates it turns the swashplate 9, transfer pinion axles 14 and the reversing pinions and axles16 with it as described herein.

Figure 8 is a perspective view with a cut away portion of an output transfer casing in accordance with the present invention. Power is input into the hub through the input transfer casing 17, the desired ratio is then selected by turning the control shaft 1 which operates the gear as described herein before being output by the outer transfer casing 20 to a bicycle wheel.

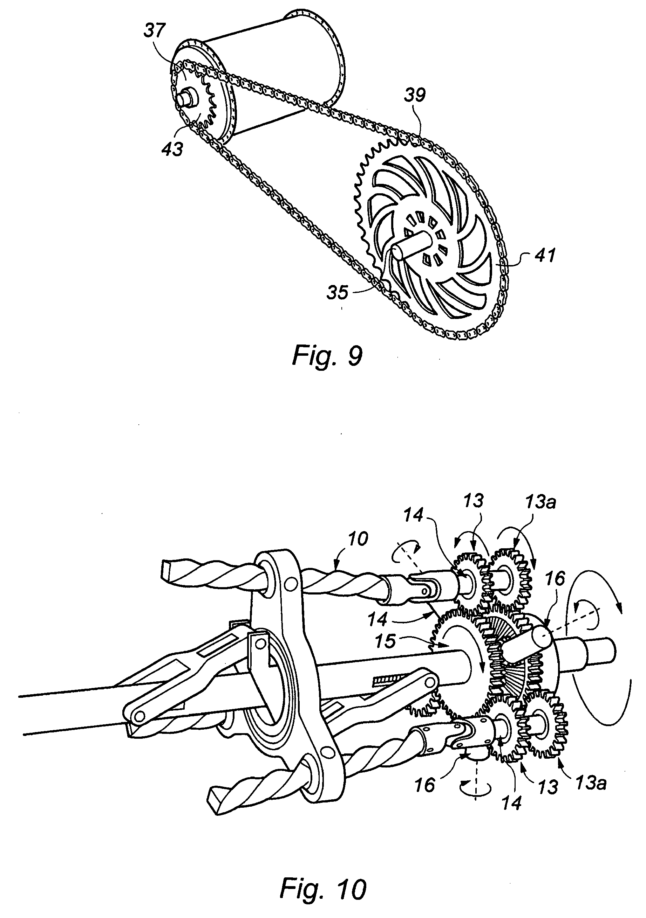

In use, input power from the pedals is transferred through to the crank shaft 35 to the hub via a conventional chain 39 and sprocket arrangement 41, 43 as shown in figure 9. The input sprocket 43 on the hub is connected to the input transfer casing 17 figure 7 onto which the three transfer pinion axles14 are mounted. As the input transfer casing is rotated by the input from the cyclist, the three shafts & swash plate are carried around the main axle. As the assembly rotates around the central shaft 4 with the swashplate 9 in a position perpendicular to the main shaft the gear ratio is 1:1. A user may change the gear ratio in a continuously variable manner by moving a gear lever to change the angle of the swashplate which are cotrolled by rotation of the control shaft 1 and consequent linear motion of the trunions.

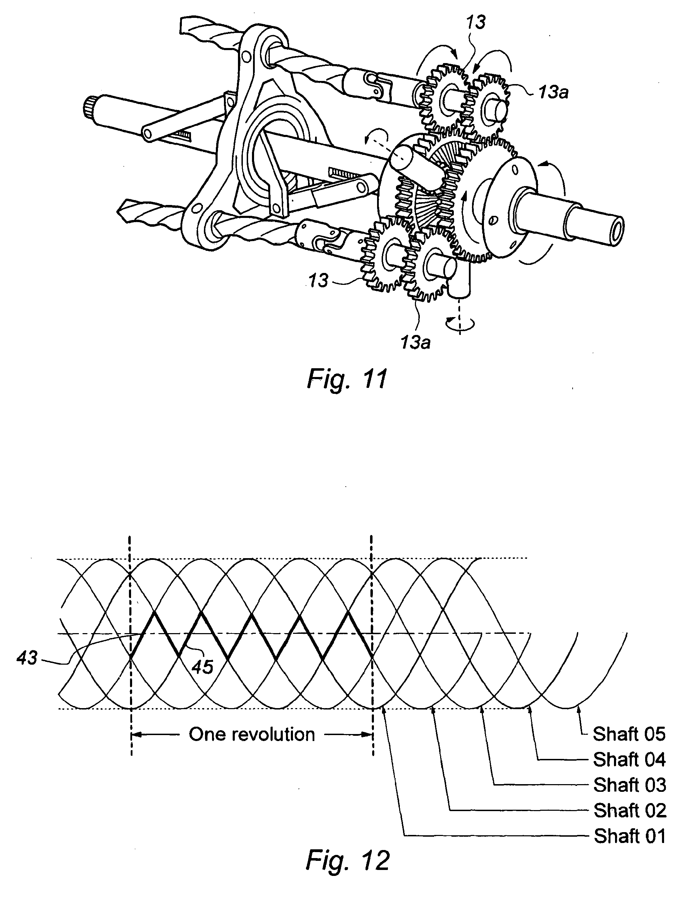

Figure 10 is a perspective view from a first side of a second embodiment of the present invention and Figure 11 is a perspective view from a second side of the same.

Figures 10 and 11 show a gear system similar to that shown in figure 4 except that a second set of transfer pinions 13a is provided. As the helical shafts 10 are rotated both clockwise and anti-clockwise by the back and forth 'stroke' of the swashplate, two transfer pinions(13) with one way bearings are mounted on each transfer pinion axle (14) to transfer one direction of rotation only to the output gears & shaft as shown by arrows 39, 41. Therefore a reversing gear 16 is required in order to convert the motion of the anti-clockwise output pinion from anti-clockwise rotation to clockwise rotational output to match the direction of the output shaft.

Generally the more shafts, then the smoother the output torque. Also two sets of output gears may be also be utilised per shaft with two one-way bearings configured to transfer he opposite rotations from the back and forth 'stroke' of the swashplate. This bi-directional output must then be corrected by means of reversing the rotation of one set of gears so that the direction of rotation is then synchronous.

It is expected that the use of five shafts utilising two output gears per shaft is of particular utility. This arrangement gives five wave forms with power transfer on the up stage of the wave 43 and the down stage of the wave 45 in figure 12. This results in 10 power transfer stages per revolution. As can be seen in figure 12 this results in the power transfer occurring in the relatively straight section of the wave, resulting a relatively constant velocity with little in the way of torque ripple in the output.

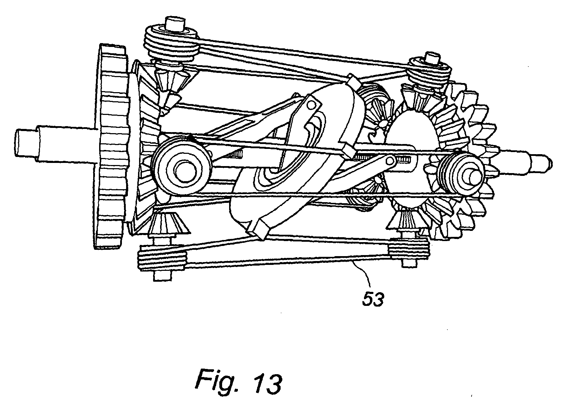

Figure 13 shows an alternative mechanical layout 51 utilising a pulley type system 53 to convert the reciprocating motion of the swashplate 55 to rotational by means of one-way bearings on the pulley shafts. The rotational motion is then transferred through bevel gears to the output stage whether it be a bicycle hub or some form of other output device.

Figures 14 to 16 show a third embodiment of the present invention. IN this example, the mechanism for mounting the swash plate and controlling the angle of the swashplate relative to the axis of rotation is very similar to that shown in previous embodiments of the present invention and identical reference numerals have been used where appropriate. The main difference between the third embodiment of the present invention and the previous embodiments is the mechanism by which the rotational and reciprocal movement of the swashplate 9 is translated into rotational movement at transfer pinion 13. In this example, a universal joint or gimbal 63 is connected through the swashplate 9 at or near the outermost radial extent of the swashplate. The joint 63 is connected to the first end of a rod 65, the second end of which is fixedly connected to a ball 67 or other suitable member. The ball 67 has a pin 77 or other suitable member which fixes a bearing 75 at a distance from the ball 67. As can be seen n figure 16, a pair of bearings are positioned diametrically opposite one another in channels 71 and 73. These channels are arranged in a helical shape on the inner surface of the cylinder 69 as shown in figures 14 and 15.

In use, the angle of the swash plate is selected to provide a suitable gear ratio between the input rotation and the output. The rotatable joint 63 which is connected through the swash plate ensures that reciprocating movement of the rod 65 is in line with the cylinder. When the rod 65 is pushed towards the cylinder 69, the bearings 75 travel through the channels 71, 73 and cause rotation of the cylinder. This rotation causes the transfer pinions to rotate providing a rotational output from the gear.

The configuration outlined above is but one of several configurations possible for the device, much as a bicycle hub gear is but one application for it. The principle may be applied to provide gearing solutions to almost any situation where a wide ratio range with continuously variable ratios is desirable. There are also other mechanical configurations which can achieve the same conversions of the various motions required to achieve a variable output.

Improvements and modifications may be incorporated herein without deviating from the scope of the invention.

## Claims

1. A transmission comprising:
an input for receiving rotational motion from a source;
an output for transmitting rotational motion to a wheel or the like; and
a continuously variable transmission mechanism comprising:
a swashplate assembly comprising, a swashplate (9), rotatably mounted on a swashplate bearing (8) about a first axis of rotation, the swashplate being rotatably coupled to the input for rotation about the swashplate bearing such that rotational movement of the swashplate is transferred to the output;
control means which varies the angle of the swashplate assembly with respect to the first axis of rotation in a continuous manner;
a coupling comprising:
a reciprocating member which moves along the direction of the first axis of rotation in response to reciprocal movement of the rotatable swashplate in said direction, the reciprocal movement being caused by the swashplate being at an acute angle relative to the axis of rotation,
and
a rotatable coupling which converts the reciprocating motion to rotational motion at the output via a gear mechanism (13, 15),
wherein the angle of the swashplate assembly with respect to the first axis of rotation determines the proportion of the input which is transmitted to the output via the coupling and therefore the gear ratio of the gear in use;
**characterised in that** the swashplate comprises a plurality of connection points connected to respective reciprocating members, the connection points being equiangularly separated around the circumference of the swashplate.

2. A transmission as claimed in claim 1 wherein the control means comprises a rotatable control shaft (1) which is coupled to the swashplate assembly at moveable coupling points on both sides at the pivotable mounting point of the swashplate and wherein the angle of pivot is determined by the distance between the moveable coupling points and the pivot point which is determined by rotation of the control shaft.

3. A transmission as claimed in claim 2 wherein the moveable coupling point comprises trunions (2) mounted for linear movement along the control shaft (1).

4. A transmission as claimed in claim 1 wherein the connection point comprises a hole through which a reciprocating member may be inserted.

5. A transmission as claimed in any preceding claim wherein the reciprocating member comprises a shaft (10) which travels within a hub which has helical grooves inscribed in the inside surface such that the reciprocating shaft (10) engages into the grooves to convert the linear motion of the swashplate into rotational motion.

6. A transmission as claimed in claim 1 wherein the reciprocating member is a pulley with a one-way bearing.

7. A transmission as claimed in claim 1 wherein the reciprocating member is a belt connected to pulleys with one-way bearings.

8. A transmission as claimed in any preceding claim wherein the output mechanism comprises a transfer pinion (13) coupled between the reciprocating member (10) and an output gear (15).

9. A transmission as claimed in any preceding claim wherein the output mechanism further comprises a one-way bearing (12).

10. A transmission as claimed in any preceding claim wherein the output mechanism further comprises a second transfer pinion (13a) coupled to the first transfer pinion (13) and to a second output gear and a reversing gear (16) to convert the motion in the second transfer pinion to match that of the output shaft.

11. A transmission as claimed in claim 1 wherein the rotational and reciprocal movement of the swashplate is translated into rotational movement at the transfer pinion by means of a universal joint or gimbal (63) connected through the swashplate at or near the outermost radial extent of the swashplate.

12. A transmission as claimed in claims 1 and wherein the first axle is fixed and the plurality of linkages & reciprocating members rotate about the main axle.

13. A transmission as claimed in claim 1 wherein the main axle rotates within the assembly of linkages and reciprocating members.

## Patentansprüche

1. Ein Getriebe besteht aus:
Einen Antrieb zum Empfang einer Rotationsbewegung aus einer Quelle;
Einem Abtrieb zur Übertragung der Rotationsbewegung beispielsweise zu einem Rad überträgt;
und
Einem stufenlosen Getriebemechanismus bestehend aus:
Eine Taumelscheiben-Halterung welche eine
eine Taumelscheibe (9), die drehbar auf einem Taumelscheibenlager (8) über einer ersten Rotationsachse sitzt und dabei drehfest mit dem Antrieb zum Empfang der Rotationsbewegung um das Taumelscheibenlager verbunden ist, so dass die erzeugte Drehbewegung der Taumelscheibe an den Abtrieb übertragen werden kann;
Steuereinrichtungen, welche den Winkel der Taumelscheiben-Halterung zum Rotormast und der ersten Drehachse kontinuierlich variieren;
Einer Kupplung bestehend aus:
Einem hin-und hergehenden Element, das sich in Richtung der ersten Drehachse als Reaktion auf gegenseitige Bewegung der drehbaren Taumelscheibe in diese Richtung bewegt, die gegenseitige Bewegung, verursacht durch die Taumelscheibe in einem spitzen Winkel zu der Drehachse, und
eine drehbare Kupplung wandelt die Bewegung in Drehbewegung am Ausgang über einen Getriebemechanismus um (13,15), der Winkel der Taumelscheiben-Lager in Bezug auf die erste Drehachse bestimmt dabei den Anteil der Drehbewegung der an den Ausgang über die Kupplung übertragen wird und somit folglich das Übersetzungsverhältnis des Getriebes; das **dadurch gekennzeichnet ist, daß** die Taumelscheibe eine Vielzahl von Verbindungspunkten zu den jeweiligen sich hin-und herbewegenden Elementen besitzt, die Verbindungspunke sind gleichwinklig um den Umfang der Taumelscheibe getrennt angeschlossen.

2. Ein Getriebe wie beschrieben im Punkt 1 umfasst Steuerungselemente bestehend aus einer drehbaren Schaltwelle (1) welche an das Taumelscheiben-Lager auf beweglichen Verbindungsstellen auf beiden Seiten der Taumelscheibe montiert ist und wobei der Winkel des Drehpunkts durch den Abstand zwischen den beweglichen Verbindungsstellen und der Drehpunkt durch Drehung der Schaltwelle bestimmt wird.

3. Ein Getriebe wie beschrieben im Punkt 2 bei dem die bewegliche Verbindungsstelle einen Schildzapfen (2) umfasst für lineare Bewegungen entlang der Schaltwelle (1).

4. Ein Getriebe nach Punkt 1 wobei im Verbindungspunkt ein Loch vorhanden ist durch das die hin-und hergehenden Elemente eingeführt werden können.

5. Ein Getriebe wie in einem der vorhergehenden Punkte erklärt, wobei die hin-und hergehenden Elemente eine Welle beinhalten (10) die sich innerhalb eines Drehkreuzes bewegt. Das Drehkreuz besitzt schraubenförmige Nuten an der Innenseite, in welche der Hubkolben (10) greift und die lineare Bewegung der Taumelscheibe in Drehbewegung umwandelt.

6. Ein Getriebe wie beschrieben im Punkt 1 wobei die hin-und hergehenden Elemente Teil einer Riemenscheibe mit einem Einweg-Lager ist.

7. Ein Getriebe gemäß Punkt 1 wobei die hin-und hergehenden Elemente einen Gürtel bilden, der mit Riemenscheiben mit einem Einweg-Lager verbunden ist.

8. Ein Getriebe wie in den vorhergehenden Punkten erläutert, wobei der Abtriebsmechanismus ein Getrieberad zwischen (13) dem hin-und hergehenden Element (10) und einem Abtriebsrad umfasst (15).

9. Ein Getriebe wie in den vorhergehenden Punkten erläutert wobei der Abtriebsmechanismus zusätzlich ein Einweg-Lager enthält (12).

10. Ein Getriebe wie in den vorhergehenden Punkten erläutert, wobei der Abtriebsmechanismus zusätzlich ein zweites Getrieberad umfasst (13a), welches an das erste Getrieberad sowie (13) an ein zweites Abtriebsrad und ein Umkehrgetriebe gekoppelt (16) ist um die Bewegung des zweiten Getrieberads mit der Abtriebswelle übereinstimmend zu konvertieren.

11. Ein Getriebe gemäß Punkt 1 bei dem die Rotations- und gegenseitige Bewegung der Taumelscheibe am Getrieberad in Drehbewegung übersetzt wird durch ein Universal- oder Kardangelenk (63) welches durch die Taumelscheibe an oder in der Nähe der Außenseite der Taumelscheibe verbunden ist.

12. Ein Getriebe gemäß Punkt 1 bei dem ferner die erste Achse fixiert ist und die Mehrheit der Verbindungselemente & hin-und hergehenden Elemente sich um die Hauptachse drehen.

13. Ein Getriebe gemäß Punkt 1 wobei sich die Hauptachse um die Verbindungselemte und hin-und hergehenden Elementen dreht.

## Revendications

1. Un système de transmission comprenant:
une entrée pour recevoir un mouvement de rotation d'une source;
une sortie pour transmettre un mouvement de rotation à une roue ou similaire; et
un mécanisme de transmission à variation continue comprenant:
un ensemble plateau cyclique comprenant,
un plateau cyclique (9) monté sur roulements autour d'un premier axe de rotation, le plateau cyclique étant couplé à l'entrée pour tourner sur roulements (8) de telle sorte que le mouvement de rotation du plateau cyclique est transféré à la sortie;
un moyen de commande pour faire varier l'angle du plateau cyclique par rapport au premier axe de rotation d'une manière continue;
un dispositif de liaison comprenant:
un élément à mouvement alternatif qui se déplace suivant la direction du premier axe de rotation en réponse au mouvement alternatif du plateau cyclique dans ladite direction, le mouvement alternatif étant provoqué par le plateau cyclique étant à un angle aigu par rapport à l'axe de rotation, et
un dispositif de liaison rotatif qui convertit le mouvement alternatif en un mouvement de rotation à la sortie par l'intermédiaire d'un mécanisme d'engrenage (13,15),
dans lequel l'angle du plateau cyclique par rapport au premier axe de rotation détermine la proportion de l'entrée qui est transmise à la sortie par l'intermédiaire du dispositive de liaison et par conséquent le rapport de démultiplication de l'engrenage utilisé; **caractérisé par le fait que** le plateau cyclique comprend plusieurs points de liaison reliés aux élements à mouvement alternatif associés, les points de liaison étant espacés du même angle sur la circonférence du plateau cyclique.

2. Un systeme de transmission comme revendiqué selon la revendication 1 dans lequel le moyen de commande comprend un arbre de commande (1) couplé à l'ensemble de plateau cyclique par des points de liaison mobiles de chaque côté du plateau au niveau du point de pivot du plateau cyclique.
et dans lequel l'angle de pivotement est déterminé par la distance entre les points de liaison mobiles et le point de pivot déterminé par la rotation de l'arbre de commande.

3. Un système de transmission comme revendiqué selon la revendication 2 dans lequel le point de liaison mobile comprend des tourillons (2) montés pour effectuer un mouvement linéaire le long de l'arbre de commande (1).

4. Un système de transmission comme revendiqué selon la revendication 1 dans lequel le point de liaison comprend un trou à travers lequel un élément à mouvement alternatif peut être inséré.

5. Un système de transmission comme revendiqué selon quelque revendications précédentes, dans lequel l'élément à mouvement alternatif comporte un arbre (10) qui se déplace à l'intérieur d'un moyeu qui présente des rainures hélicoïdales inscrites dans la surface intérieure de telle sorte que l'element a movement alternatif soit (10) engagé dans les rainures pour convertir le mouvement linéaire du plateau cyclique en un mouvement rotatif.

6. Un système de transmission comme revendiqué selon la revendication 1 dans lequel l'élément à mouvement alternatif est une poulie sur roulements à sens unique.

7. Un système de transmission comme revendiqué selon la revendication 1 dans lequel l'élément a movement alternatif est une courroie reliée à des poulies sur roulements à sens unique.

8. Un système de transmission comme revendiqué selon quelque revendications précédentes, dans lequel le mécanisme de sortie comprend un pignon de transfert (13) connecté entre l'élément à mouvement alternatif (10) et un engrenage de sortie (15).

9. Un système de transmission comme revendiqué selon quelque revendications précédentes, dans lequel le mécanisme de sortie comprend en outre un roulement à sens unique (12).

10. Un système de transmission comme revendiqué selon quelque revendications précédentes, dans lequel le mécanisme de sortie comprend en outre un second pignon de transfert (13a) connecté au premier pignon de transfert (13) et un second engrenage de sortie et un engrenage d'inversion (16) pour transformer le mouvement dans le deuxième pignon de transfert pour correspondre à celui de l'arbre de sortie.

11. Un système de transmission comme revendiqué selon la revendication 1 dans lequel le mouvement rotationnel et alternatif du plateau cyclique se traduit par un mouvement de rotation du pignon de transfert au moyen d'un joint universel ou d'un cardan (63) connecté au plateau cyclique a ou près de la circonférence du plateau cyclique.

12. Un système de transmission comme revendiqué selon la revendication 1 et dans lequel le premier axe est fixé et les multiples connexions et elements a mouvement alternatifs tournent autour de l'axe principal.

13. Un système de transmission comme revendiqué selon la revendication 1 dans lequel l'axe principal tourne au milieu des multiples connexions et éléments à mouvement alternatif.
